# EUROPÄISCHE PATENTANMELDUNG

(11) **EP 4 134 040 A1**
(43) Veröffentlichungstag der Anmeldung: **15.02.2023**
(21) Anmeldenummer: 21190419.8
(22) Anmeldetag: 09.08.2021
(51) Int. Cl.: A61C 13/00, A61C 8/00

(54) **FRÄSROHLING SOWIE VERFAHREN ZUR ERZEUGUNG EINES DENTALRESTAURATIONSTEILS AUS EINEM FRÄSROHLING**

(71) Anmelder: Ivoclar Vivadent AG, 9494 Schaan (LI)
(72) Erfinder: BURGER, Goran, 9475 Grabs (CH)
(74) Vertreter: Baldus, Oliver

(57) **Zusammenfassung**

Es ist eine Schutzkappenvorrichtung für einen Fräsrohling, mit einem Halteelement (24) oder Haltefortsatz (26), mit welchem der Fräsrohling (1), insbesondere in einem Spannhalter einer Dentalfräsmaschine, einspannbar ist, und mit einem zentralen Kanal (12) vorgesehen, der sich über mindestens 70 % der Länge des Rohlings (1) erstreckt und/oder diesen durchtritt. Der Kanal (12) endet an oder in dem Halteelement (24) oder -fortsatz (26). Ein Zentralstift (4) erstreckt sich in dem Kanal (12) und ist in dem Kanal (12) entweder fixiertoder beweglich gelagert, Es ist vorgesehen, dass eine Schutzkappe (10) eine Stirnseite (20), die dem Halteelement (24) oder Haltefortsatz (26) gegenüber liegt, des Fräsrohlings (1) abdeckt.

## Beschreibung

Die Erfindung betrifft eine Schutzkappenvorrichtung für einen Fräsrohling, gemäß dem Oberbegriff von Anspruch 1, einen Fräsrohling gemäß dem Oberbegriff von Anspruch 8, sowie ein Verfahren zur Herstellung eines Dentalrestaurationsteils aus einem Fräsrohling, gemäß dem Oberbegriff von Anspruch 13.

Aus der WO 99/013 796 A1 ist ein Rohling mit im Wesentlichen rechteckigen Querschnitt bekannt. Die Fixierung in einer Bearbeitungs-Vorrichtung erfolgt einseitig mit mittels eines bolzenförmigen Adapters.

Die WO 2016/005 027 A1, die WO 2015/044 862 A1 und die WO 2016/062 375 A1 beschreiben zylinderförmige und zylinderähnliche Rohlinge, die einseitig mit einer Schraube in einem Halte-Element fixiert werden können.

Aus der EP 2 604 219 A1 und der EP 2 837 357 A1 sind Abutment-HalteVorrichtungen für einen Fräsvorgang bekannt, welche eine Fixierungseinheit aufweisen, in die ein Abutment eingesetzt werden kann. Die verwendeten Rohlinge sind gängige zylindrische oder zylinderähnliche (im Querschnitt D-förmige) Dentalrohlinge. Ein Nachteil dieser bekannten Fräsrohlinge ist die nicht optimale Orientierung an der anatomischen Geometrie natürlicher Zähne und somit ein unnötiger Materialaufwand, welcher vermieden werden kann.

Nach bisher bekannten Stand der Technik sind einteilige Abutment-Rohlinge bekannt geworden, jedoch ist deren Material- und Farben-Vielfalt begrenzt und ihre Kompatibilität zu herkömmlichen Halter-Materialien oder -Vorrichtungen ist eingeschränkt. Die gängigen Rohlinge weisen keine bzw. weniger anatomisch orientierte Grund-Geometrien, noch mehrteilige System-Komponenten auf.

Der Erfindung liegt daher die Aufgabe zugrunde, eine Schutzkappenvorrichtung für einen Fräsrohling, gemäß dem Oberbegriff von Anspruch 1, einen Fräsrohling, gemäß dem Oberbegriff von Anspruch 8, sowie ein Verfahren zur Herstellung eines Dentalrestaurationsteils aus einem Fräsrohling, gemäß dem Oberbegriff von Anspruch 13, der eine effiziente Herstellung von individuellen, ästhetischen und hoch präzisen Abutment- und Hybrid-Abutment-Restaurationen ermöglicht.

Diese Aufgabe wird erfindungsgemäß durch Anspruch 1, 8 bzw. 13 gelöst. Vorteilhafte Weiterbildungen ergeben sich aus den Unteransprüchen.

Erfindungsgemäß wird eine Schutzkappenvorrichtung für einen Fräsrohling gemäß dem Oberbegriff von Anspruch 1 geschaffen, um den erfindungsgemäßen Schutz des Implantatanschlusses zu gewährleisten.

Die Fixierung von Fräsrohlingen in Dentalfräsmaschinen wird bisher meist über die Implantat-Schnittstelle umgesetzt. Die dadurch resultierende Belastung der empfindlichen Implantat-Schnittstelle ist somit unumgänglich, sodass das Risiko eingegangen wird diese zu deformieren. Dies beeinflusst die Passgenauigkeit und Lebensdauer eines Dentalrestaurationsteils enorm. Durch die erfindungsgemäße Ausgestaltung des Fräsrohlings mit einem Haltefortsatz auf der gegenüberliegenden Seite des Implantatanschlusses und einem erfindungsgemäßen Schutzes des Implantatanschlusses kann dieses Problem überraschend einfach umgangen werden.

Der Haltefortsatz ist erfindungsgemäß am gegenüberliegenden Ende des empfindlichen Implantatanschlusses, über welchen der Fräsrohling beispielsweise in einen Spannhalter einer Dentalfräsmaschine eingespannt werden kann, angebracht. Die Schutzkappe dient bevorzugt als Schutz des Implantatanschlusses vor Verunreinigungen, kann jedoch auch zur Einspannung verwendet werden. Auch eine beidseitige Einspannung des Fräsrohlings ist möglich.

An der Seite des Implantatanschlusses weist der Fräsrohling einen Kegelstumpfabschnitt auf, so dass die vorgefertigte Grund-Geometrie des Fräsrohlings optimal an die natürliche Form von Zähnen angepasst ist. Die Verwendung von anatomisch orientierten Grund-Geometrien bedeutet eine enorme Material- und somit Kosteneinsparung sowie auch eine Zeitersparnis.

An diesen Kegelstumpfabschnitt kann der Implantatanschluss inklusive der Schutzkappe angebracht werden. Bei der Verwendung von mehrteiligen System-Komponenten ist es möglich Einzelteile wiederzuverwenden und somit Material und Kosten einzusparen, was auch im Sinne des Natur- und Umweltschutzes erstrebenswert ist.

Besonders vorteilhaft ist es erfindungsgemäß, wenn ein Fräsrohling gemäß dem Oberbegriff von Anspruch 8 geschaffen wird, der aus Keramik, Komposit, Metall oder einem anderen Dental-Werkstoff besteht und mit einem Haltefortsatz ausgebildet ist.

Die Fixierungen der jeweiligen Rohlinge in der Bearbeitungs-Vorrichtung hängen maßgeblich von dem jeweiligen Halte-Element der Fräseinheit ab. Die hier beschriebenen Möglichkeiten ermöglichen eine schonende Einspannung in herkömmliche Bearbeitungs-Vorrichtungen, ohne die Implantat-Schnittstelle übermäßig zu belasten. Die geringe mechanische Belastung der Implantat-Schnittstelle erlaubt eine hohe Präzision bei der Herstellung und somit eine hohe Passgenauigkeit sowie eine längere Lebensdauer des Dentalrestaurationsteils.

Ein Vorteil der erfindungsgemäßen Lösung ist die Verwendung eines teilgefertigten Fräsrohlings, welcher sich durch die erfindungsgemäße Ausprägung vorteilhaft auf die effiziente Herstellung von individuellen und ästhetischen Abutment- und Hybrid-Abutment-Restaurationen auswirkt. Die Verwendung eines teilgefertigten Fräsrohlings ist vorteilhaft, da es durch die geometrische Ähnlichkeit zwischen Rohling und fertig gefrästem Produkt einen geringeren Unterschied gibt als bei herkömmlichen Rohlingen. Dies ermöglicht eine schnellere und effizientere Herstellung von Dentalrestaurationsteilen und somit eine enorme Zeit- und auch Kostenersparnis.

Bei einem teilgefertigten Fräsrohling handelt es sich um einen Rohling zur Verwendung bei CAD/CAM-Fräsvorgängen. Er ist aus ein- bis mehrteiligen Elementen aufgebaut, die neben dem Restaurationsmaterial, eine Abutment-Verbindung, Referenzflächen, sowie Adapteranteile aufweisen.

Das Restaurationsmaterial ist geometrisch an einen natürlichen Zahn angelehnt, so dass bei der Bearbeitung der erste grobe Frässchritt eingespart werden kann und zur Fertigbearbeitung weniger Material als bei anderen Rohlingen entfernt werden muss. Dies ist am einfachsten gegeben, indem das Restaurationsmaterial kegelstumpfförmig ausgestaltet ist.

Der Fräsrohling weist an dem von dem Haltefortsatz entfernten Teil einen Kegelstumpfabschnitt auf, der sich über mehr als 30% der Länge des Rohlings erstreckt. Diese Ausgestaltung erlaubt neben der enormen Zeitersparnis auch eine Schonung des Fräsers, da dieser somit weniger Material abtragen muss, was die Lebensdauer des Fräsers enorm verlängert und daher wiederum eine Kostenersparnis mit sich bringt. Auch kann teures Dental-Material eingespart werden, da weniger abgetragen werden muss und somit weniger Material verloren geht.

Eine erfindungsgemäße Variante eines teilgefertigten Fräsrohlings besteht vorzugsweise aus einem dentalen Werkstoff wie beispielsweise Metall oder Keramik und ist bevorzugt teilgesintert. Der Basisteil des Restaurationsmaterials, also der Kegelstumpfanteil, im Bereich der Anschlussgeometrie zum Implantatanschluss, ist, wie schon oben erwähnt, erfindungsgemäß in Anlehnung an das Gingiva-Emergenz-Profil konisch, also kegelstumpfförmig, ausgeprägt. Dies hat eine überraschend positive Wirkung auf den Herstellungsprozess, da durch die konische Ausprägung die natürliche Form von Zähnen schon im Ansatz nachempfunden wird und somit die Bearbeitungszeit, die Belastung und Abnutzung des Fräsers sowie der Materialverlust während des Fräßvorgangs enorm reduziert werden können.

Der Fräsrohling besitzt einen zentralen Kanal, der sich über mindestens 70 % der Länge des Rohlings erstreckt und/oder diesen durchtritt. Dieser Kanal endet an oder in dem Haltefortsatz.

In dem zentralen Kanal des Rohlings ist ein Zentralstift eingesetzt, wobei der Zentralstift entweder in dem Kanal fixiert ist oder beweglich gelagert ist. Der Zentralstift ist an dem haltefortsatzseitigen Ende gegen den Kanal abgedichtet und füllt den Kanal zentriert zu über 50% aus. Bevorzugt füllt dieser den Kanal zu über 90% und optimalerweise vollständig aus, um eine optimale Fixierung und Abdichtung gegen Verunreinigungen durch Staub oder Frässpäne zu erreichen. Bei einem nicht vollständigen Ausfüllen des Zentralkanals kann der Zentralstift einfach eingesetzt und positioniert werden. Auch wird hierdurch eine leichte Korrektur der Positionierung des Fräsrohlings ermöglicht, ohne die Bohrung verändern zu müssen. Weiterhin stellt eine derartige Ausgestaltung keine hohen Präzisionsanforderungen, weder an den Zentralstift noch die Bohrung des Zentralkanals. Dies ermöglicht Kostenersparnis bei der Herstellung und dadurch auch ein kostengünstiges Dentalrestaurationsteil, ohne qualitative Einbußen in Kauf nehmen zu müssen.

Bei vollständigem Ausfüllen des Zentralkanals dient der Zentralstift zur Stabilisierung des Fräsrohlings beim Fräs-Vorgang. Ein derartiger Zentralstift ermöglicht eine optimale Fixierung des Implantatanschlusses und verteilt die darauf wirkenden Kräfte einheitlich über den gesamten Rohling bis hin zum Haltefortsatz, so dass Verformungen vermieden werden und die dadurch resultierende Belastung, welche zu Rissen im Dental-Material führen kann, minimiert wird.

In einer weiteren erfindungsgemäßen Ausgestaltung weist der Zentralstift an dem Kegelstumpfende des Rohlings ein Gewinde auf, das zur Fixierung mit einer Mutter in Eingriff steht. In vorteilhafter Ausgestaltung ist die Mutter sechs-kantig ausgebildet. Diese Mutter wiederum ist zum Schutz der Mutter und des Zentralstifts gegen den Kegelstumpf von einer Schutzkappe abgedeckt. Bei der Verwendung einer Schutzkappe aus massivem Material, wie beispielsweise Metall, kann diese zum einen als Schutz wichtiger Bauteile gegenüber Beschädigungen durch den Fräskopf bei einem Fräsvorgang dienen. Hierbei ist das Material der Schutzkappe entscheidend, da der Fräskopf härter ist als die Bauteile des Fräsrohlings und eine Schutzkappe aus Elastomer diesem nichts entgegen setzen könnte. Zum Anderen verhindert eine Schutzkappe, welche mit einer Dichtung ausgestattet ist, das Eindringen von Staub, welcher beim Fräsvorgang entsteht, oder anderer Verunreinigungen. Durch das Eindringen von Stäuben an empfindliche Teile wie das Gewinde oder in den Zentralkanal, können unvorteilhafte, ungleichmäßige Belastungen beim Fräsvorgang, aber auch in der späteren Verwendung des Dentalrestaurationsteils entstehen. Solche Verunreinigungen sind schwer zu entfernen, können im Laufe der Zeit zu Abnutzungen führen und verkürzen die Lebensdauer eines Dentalrestaurationsteils enorm.

In weiterer vorteilhafter Ausgestaltung weist der Zentralkanal, insbesondere am haltefortsatzseitigen Ende, am Kegelstumpfende oder entlang des gesamten zentralen Kanals, ein Gewinde auf. Der Zentralkanal und der Zentralstift, der in dieser Ausgestaltungsform ein zum Gewinde des Zentralkanals passendes Außengewinde aufweist, können somit ineinander schraubbar sein. Außerdem kann die Schutzkappe ein passendes Gewinde aufweisen, mit welchem sie auf den Zentralstift aufschraubbar ist. Dies kann zum einen als Fixierung der Schutzkappe, aber auch zur Fixierung des Zentralstift gegen ein Herausziehen in Richtung haltefortsatzseitiges Ende, dienen. Die Verwendung eines Zentralstiftes mit Gewinde ermöglicht auch eine einfache Fixierung des Zentralstiftes vor dem Herausziehen in Richtung haltefortsatzseitiges Ende mittels einer Mutter, die an der Kegelstumpfseite auf den Zentralstift aufschraubbar ist oder mittels einer Kombination aller erwähnten Möglichkeiten. Insofern ist es bevorzugt, dass das Gewinde einem Implantatanschluss gegenüberliegt.

In einer vorteilhaften Ausgestaltung kann der Zentralstift auch mittels einer einseitigen Verdickung, einer Dichtlippe oder mittels Schrauben vor dem Herausziehen geschützt sein.

Erfindungsgemäß sind an der Kegelstumpfseite des teilgefertigten Fräsrohlings herkömmliche Adapteranteile angebracht. Hierzu kann während der Herstellung des Fräsrohlings eine Vertiefung in die Kegelstumpfseite des Fräsrohlings eingebracht, beispielsweise durch einen Fräsvorgang, und der Adapteranteil anschließend hinein geklebt werden. Des weiteren ist es denkbar, dass der Adapteranteil durch eine einfache Klebefixierung an der Kegelstumpfseite des teilgefertigten Fräsrohlings fixiert ist.

Diese Adapteranteile ermöglichen die Kompatibilität des erfindungsgemäßen teilgefertigten Fräsrohlings zu gängigen Implantat-Schnittstellen. Der Implantatanschluss kann nach sämtlichen gängigen Ausführungen, wie beispielsweise einem sogenannten Außen-Hex, einem Innen-Hex oder einem Konus, ausgestaltet sein.

Erfindungsgemäß wird der Adapteranteil des Rohlings von einer kuppelförmigen Schutzkappe dichtend abgedeckt, um eine Kontamination dieser schwer zu reinigender Teile durch anfallenden Staub oder anfallende Späne aus dem Frässchritt, zu vermeiden. Des Weiteren können je nach Material der Schutzkappe auch Kollisionen des Fräswerkzeugs mit dem Implantatanschluss verhindert werden. Dies ist jedoch nur der Fall, wenn die Schutzkappe aus einem sehr harten Material, wie beispielsweise Metall, besteht.

Diese Schutzkappe kann auf verschiedene Weise an dem Implantatanschluss befestigt sein. Eine denkbar schlichte Variante ist ein einfacher Reibschluss. Es sind jedoch auch weitere Varianten, wie beispielsweise eine Ausgestaltung des Dichtringes dergestalt, dass er die Schutzkappe gegen eine Hinterschneidung des teilgefertigten Rohlings abdichtet, zwischen Schutzkappe und Fräsrohling denkbar. Hierbei ist im teilgefertigten Fräsrohling eine Nut an der Kegelstumpfseite vorgesehen, in welche eine dafür vorgesehene Ausstülpung oder Dichtlippe der Schutzkappe genau hineinpasst. Dies dichtet zum Einen die Schutzkappe gegen das Eindringen von Staub ab, zum Anderen fixiert das ineinander Greifen der Dichtlippe und der Nut die Schutzkappe auf eine einfache Weise am Fräsrohling.

Des Weiteren ist als Befestigung der Schutzkappe auch ein Gewinde möglich. Beispielsweise könnte am Ende des Zentralstiftes ein Außengewinde angebracht sein, welches mit einem passenden Innengewinde, welches an der Schutzkappe angebracht ist in Wechselwirkung steht. Diese Variante ist vor allem bei einer massiven Schutzkappe aus Vollgummi oder ähnlichen Materialien denkbar. Jedoch sind auch Möglichkeiten für hohle Schutzkappen denkbar, indem beispielsweise die Schutzkappe am unteren Ende eine Verstärkung mit Innengewinde aufweist, die der Zentralstift, welcher ein passendes Außengewinde aufweist, durchdringt und die Schutzkappe somit fixiert, wobei der Zentralstift zum anderen durch das Wechselwirken mit der Schutzkappe selbst vor dem Herausziehen geschützt wird. Es ist auch möglich, eine Mutter vorzusehen, die von dem Material der Schutzkappe im übrigen umgeben ist. Die Herstellung einer solchen, aus zwei Materialien bestehenden Schutzkappe erfolgt zweckmäßig so, dass die Mutter von Kunststoffmaterial der Schutzkappe umspritzt wird. Die relativen Abmessungen sind dann bevorzugt so gewählt, dass das Kunststoffmaterial der Schutzkappe beim Festziehen der Mutter unter Vorspannung an der Stirnseite des Fräsrohlings, die dem Halteelement oder Haltefortsatz gegenüberliegt, unter Vorspannung anliegt und dort besonders gut abdichtet.

Erfindungsgemäß kann eine Schutzkappe aus verschiedenen Materialien ausgebildet sein. Besonders günstig ist die Verwendung eines elastischen Materials wie beispielsweise einem Elastomer. Jedoch sind auch andere Materialien wie Hartplastiken oder sogar Metalle möglich.

In einer vorteilhaften Ausgestaltung ist die Schutzkappe hohl ausgestaltet, um eine möglichst hohe Kompatibilität mit verschiedensten Ausführungsformen des Implantatanschlusses zu ermöglichen. Hierzu wird bevorzugt ein flexibler Kunststoff verwendet, jedoch sind auch andere Werkstoffe, wie Metalle oder Keramiken möglich.

In einer weiteren Ausführungsform kann die Schutzkappe auch aus einem Vollmaterial, beispielsweise aus einem Elastomer, einem spröden Kunststoff oder aus Metall, ausgebildet sein. Hierbei schließt sich die Schutzkappe innen mindestens teilweise an den Zentralstift und/oder den Implantatsanschluss an. Die Verwendung eines spröden Kunststoffes wäre eine besonders kostensparende Lösung, da derartige Kunststoffe günstig und einfach, beispielsweise mittels eines einfachen Gießverfahrens, zu verarbeiten sind.

Besonders günstig ist es, wenn der Implantatsanschluss vollständig und die kegelstumpfseitige Stirnfläche des Rohlings zu mehr als 50%, bevorzugt vollständig, von der Schutzkappe abdeckt sind, um das Eindringen von Verunreinigungen effektiv zu vermeiden.

In vorteilhafter Ausgestaltung ist die Schutzkappe mehrteilig, bevorzugt zweiteilig, ausgebildet. Besonders günstig erfolgt die Teilung entlang der Längsachse. Ein Vorteil der zweiteiligen Ausgestaltung ist die einfache Montage an der kegelstumpfseitigen Stirnseite und somit am Implantatanschluss durch einfaches Aneinandersetzen der beiden Hälften.

Des Weiteren ist es möglich, den Übergang zwischen Schutzkappe und Zentralstift ineinander-greifend auszugestalten, so dass durch das Zusammensetzen der Schutzkappen-Teile gleichzeitig eine Fixierung am Zentralstift erreicht wird. Dieses Ineinander-Greifen kann auf verschiedene Weisen geschehen, beispielsweise mittels sich dreidimensional erstreckender Zacken oder mittels eines Gewindes. Mittels dieser Fixierung wird einerseits die Schutzkappe befestigt, andererseits wird gleichzeitig der Zentralstift vor dem Herausziehen geschützt.

In bevorzugter Ausgestaltung ist die Schutzkappe und der Zentralstift als ein Bauteil gefertigt und beispielsweise aus Kunststoff oder Metall ausgebildet. Dies sorgt für eine weiter verbesserte Stabilität.

Eine einteilige Ausgestaltung des Zentralstifts inklusive der Schutzkappe mit Dichtung, welche gegen eine Hinterschneidung des teilgefertigten Rohlings abdichtet, ermöglicht eine optimale Abdichtung zwischen Schutzkappe und Restaurationsmaterial gegen Staub und Verschmutzung.

Erfindungsgemäß befindet sich zwischen dem Zentralstift und der Schutzkappe unten, also am Kegelstumpfende sowie zwischen dem Zentralstift und dem Fräsrohling oben, also am haltefortsatzseitigen Ende eine Dichtlippe. Diese kann auf verschiedene Arten ausgestaltet sein, beispielsweise als abdichtend gegen eine Hinterschneidung des teilgefertigten Rohlings.

Besonders günstig ist es, wenn sich das Restaurationsmaterial, aus welchem der Fräsrohling zumindest zum Großteil besteht, aus einer Keramik, besonders vorteilhaft aus Lithiummetasilikat, zusammensetzt. Die Volumenänderung beim Sintervorgang, der als finaler Schritt nach dem Fräsvorgang durchgeführt wird, ist optimalerweise sehr gering, so dass der Rohling nach dem Fräsen fertigsinterbar ist, ohne eine signifikante Volumenänderung zu zeigen. Des Weiteren können als Restaurationsmaterial weitere diverse Dental-Werkstoffe, wie beispielsweise Metall-, Keramik-, Komposite-, Kunststoff- und andere Polymer-Werkstoffe, Anwendung finden. Bei einer metallischen Ausgestaltung ist Titan bevorzugt.

Besonders günstig ist eine mehrteilige Ausgestaltung des teilgefertigten Fräsrohlings, die einen Verbundmaterialanteil oder eine mechanische Fixierung vorsieht, um den Fräsrohling-Grundkörper an einem gängigen Haltematerial zu fixieren. Die Halterung bzw. der Teil, der zur Aufnahme in eine Einspannvorrichtung vorgesehen ist, kann in den unterschiedlichen Ausführungsvarianten variiert werden. Beispielsweise ist eine einfache Klebefixierung, eine Fixierung über ein angebrachtes Halte-Element oder über ein hervortretendes Halte-Element, welches Teil des Restaurationsmaterials ist, möglich.

Derartige Variationen ermöglichen erfindungsgemäß eine Kompatibilität zu diversen gängigen Schnittstellen, beispielsweise Einspann- oder Fixierungs-Mechanismen für Fräsrohlinge, von kommerziell verfügbaren Erzeugungsvorrichtungen, insbesondere kommerziell verfügbarer Fräs-Vorrichtungen. Dies erhöht die Kompatibilität zu gängigen Haltevorrichtungen herkömmlicher Systeme.

Das Design des teilgefertigten Fräsrohlings bzw. die Geometrie des Dentalrestaurationsteils wird über CAD/CAM-Daten in die Software eingespeist und mittels des Kontrolleinheit an die Dentalfräsmaschine übertragen.

Der Scanprozess der Patientensituation erfolgt mit gängigen intra- bzw. extraoralen Verfahren. Der über dieses zahntechnische bzw. zahnärztliche Verfahren generierte CAD/CAM-Datensatz wird mittels eines sogenannten Datenmatch mit den hinterlegten Grundgeometrien und Zahnfarben verglichen, so dass kompatible Varianten des teilgefertigten Fräsrohlings passend zu den dentalen anatomischen Gegebenheiten ausgewählt werden können. Des Weiteren muss darauf geachtet werden, die für die jeweilige Fräs-Vorrichtung kompatiblen teilgefertigten Rohlinge mit den passenden Halte-Elementen zu wählen.

Die Zuordnung der Rohling-Daten zu Material, Farbe, Dimension und Schnittstelle erfolgt über ein Einlese-Verfahren via Bar-, RFID oder 3D Matrix Code. Die Fertigung von Implantat getragenen Restaurationen startet nach einem Abgleich der Referenzflächen der verfügbaren teilgefertigten Rohlinge und der Auswahl des Rohlings mit den Maßen, welche die beste Übereinstimmung mit dem herzustellenden Implantat aufweisen.

Des Weiteren verfügt die Software über eine CAD/CAM-Bibliothek verschiedenster Ausführungsbeispiele von einteiligen oder mehrteiligen Varianten erfindungsgemäßer teilgefertigter Fräsrohlinge. Außerdem sind in dieser Bibliothek unterschiedliche Zahnfarben der teilgefertigten Fräsrohlinge in Anlehnung an ein Farbschema sowie unterschiedliche Grundgeometrien hinterlegt.

In erfindungsgemäßer Ausführung wird der Fräsrohling nach Bestückung mit dem Zentralstift und der Schutzkappe in einen Spannhalter einer Dentalfräsmaschine eingespannt. Die Dentalfräsmaschine bearbeitet, insbesondere fräst, den Fräsrohling, während sich der Zentralstift in dem Kanal erstreckt und während die Schutzkappe ein Teil der Stirnfläche des Kegelstumpfes des Fräsrohlings zur Vermeidung möglicher Kontamination mit Stäuben oder Spänen abdeckt.

Zur Vermeidung von Verunreinigungen innerhalb der insbesondere hohlen Schutzkappe wird beim Fräsvorgang am kegelstumpfseitigen Ende eine sogenannte Hoheitszone vom Fräsen ausgenommen. Diese Hoheitszone kann als dünne Scheibe ausgestaltet sein, welche beim Fräsen an der Kegelstumpfseite des teilgefertigten Fräsrohlings zurückbleibt. Dies ermöglicht die sichere Verankerung der Schutzkappe durch die Abdichtung der Dichtung gegen eine Hinterschneidung des teilgefertigten Rohlings und verhindert somit das Eindringen von Stäuben, Spänen oder sonstigen Verunreinigungen während des Fräsvorgangs. Eine solche Hoheitszone kann beispielsweise 0,2 mm stark sein.

In einer bevorzugten Ausgestaltung ist die Hoheitszone konisch ausgestaltet, nimmt also vom äußeren Rand des Fräsrohlings zur Mitte, demnach zum Dentalbauteil hin, zu. Somit ergibt sich ein flacher Kegel, dessen Unterseite durch die Kegelstumpfseite des Fräsrohlings gebildet wird. Dies ermöglicht es die beim Fräsvorgang entstehenden Kräfte optimal zu verteilen und somit Risse im Dental-Werkstoff zu vermeiden.

Diese Hoheitszone kann letztlich beim Nacharbeiten oder Schlichtfräsen entfernt werden. Dies kann beispielsweise im Dentallabor mit einem Handfräser geschehen.

Das Dentalrestaurationsteil wird so aus dem Fräsrohling gefräst, dass der gingivale Bereich des Fräsrohlings der Stirnfläche des Kegelstumpfes und der okklusale Bereich dem Haltefortsatz benachbart ist.

Der Fräsvorgang startet beginnend von der gingivalen Seite des Fräsrohlings, also dem kegelstumpfseitigen Ende, aus. An der okklusalen Seite verbleiben beim Fräsvorgang Haltestege, die das Dentalrestaurationsteil auch nach dem Abschluss des Frässchritts mit dem Haltefortsatz verbinden. In einer Ausgestaltung der Erfindung werden diese erst nach Beendigung des Frässchritts zusammen mit der Schutzkappe und dem Zentralstift entfernt. Anschließend kann der der Bereich eines Implantatanschlusses schlichtgefräst und im finalen Schritt das Dentalrestaurationsteil gesintert werden.

Weitere Vorteile, Einzelheiten und Merkmale ergeben sich aus der nachfolgenden Beschreibung mehrerer Ausführungsbeispiele der Erfindung anhand der Zeichnungen.

Es zeigen:
- Fig. 1A: eine schematische Darstellung des seitlichen Querschnitts eines erfindungsgemäßen teilgefertigten Fräsrohlings in einer ersten Ausführungsform.
- Fig. 1B: eine schematische Darstellung des seitlichen Querschnitts einer weiteren Ausführungsform eines erfindungsgemäßen teilgefertigten Fräsrohlings.
- Fig. 1C: eine schematische Darstellung des seitlichen Querschnitts einer weiteren Ausführungsform eines erfindungsgemäßen teilgefertigten Fräsrohlings.
- Fig. 2: eine schematische Darstellung des seitlichen Querschnitts einer weiteren Ausführungsform eines erfindungsgemäßen teilgefertigten Fräsrohlings.
- Fig. 3: eine schematische Darstellung des seitlichen Querschnitts einer weiteren Ausführungsform eines erfindungsgemäßen teilgefertigten Fräsrohlings.
- Fig. 4: eine schematische Darstellung des seitlichen Querschnitts einer weiteren Ausführungsform eines erfindungsgemäßen teilgefertigten Fräsrohlings.
- Fig. 5: eine schematische Darstellung des seitlichen Querschnitts einer weiteren Ausführungsform eines erfindungsgemäßen teilgefertigten Fräsrohlings.
- Fig. 6: eine schematische Darstellung des seitlichen Querschnitts einer weiteren Ausführungsform eines erfindungsgemäßen teilgefertigten Fräsrohlings.
- Fig. 7: eine schematische Darstellung des seitlichen Querschnitts einer weiteren Ausführungsform eines erfindungsgemäßen teilgefertigten Fräsrohlings nach dem Fräsvorgang.
- Fig. 8: eine schematische Darstellung des Herstellungs-Verfahrens eines Dentalrestaurationsteils aus einem erfindungsgemäßen teilgefertigten Fräsrohling.

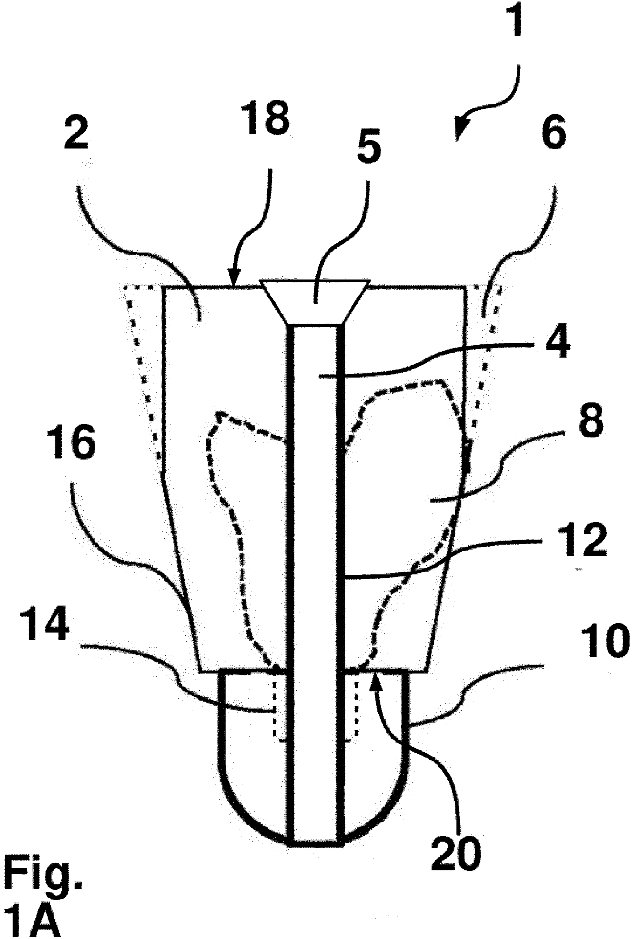

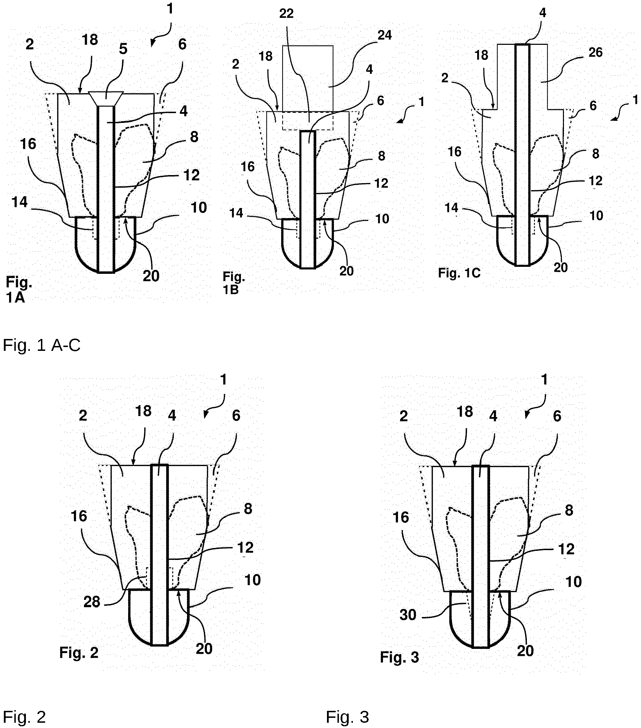

Aus **Fig. 1A** ist eine schematische Darstellung des seitlichen Querschnitts eines erfindungsgemäßen teilgefertigten Fräsrohlings **1** mit Zentralstift **4** und Stift-Konterelement **5,** Schutzkappe **10,** schematisch angedeutetem Implantat-getragenem Dentalrestaurationsteil **8** und einem Außen-Hex-Implantatanschluss **14** ersichtlich. Diese Variante des teilgefertigten Fräsrohlings ist eine einteilige Ausführung eines erfindungsgemäßen Rohlings **1.** Die Ausführung eines Implantat-getragenen Dentalrestaurationsteils **8** ist schematisch mit gestrichelten Linien darin abgebildet. In dieser Ausführungsform ist eine Fixierung an einem gängigen Haltematerial mittels Klebefixierung vorgesehen. Man könnte auch sagen, dass somit der Fräsrohling selbst als Halte-Element dienen kann . Die Ausführung eines Implantat-getragenen Dentalrestaurationsteils **8,** die mit einer CAD/CAM-Software erzeugt wurde, ist als gestrichelter Zahn-Umriss dargestellt und mit dem Außen-Hex-Implantatanschluss **14** verbunden. Der Zentralkanal **12** durchtritt in dieser Ausführungsform die komplette Länge des teilgefertigten Rohlings **1.**

Der Grundkörper **2** des teilgefertigten Fräsrohlings weist eine konische Grundgeometrie auf, wobei die Stirnseite **18** gegenüber der Basis **20** einen größeren Durchmesser aufweist, um sich an die natürliche Geometrie der okklusalen und gingivalen Zahnform-Bereiche anzupassen. Durch die Entfernung der angedeuteten überschüssigen Bereiche **6** des Grundkörpers wird die Form eines Kegelstumpfes **16** gebildet. Es ist natürlich auch möglich die Form eines Kegelstumpfes **16** schon bei der Fertigung des Rohling ohne den angedeuteten überschüssigen Bereiche **6** zu gestalten und vorzusintern. Diese spezielle Form kommt der natürlichen Zahngeometrie nahe und vermeidet somit unnötig lange Fräsvorgänge. Die kuppelartige Schutzkappe **10** ist am kegelstumpfseitigen Ende bzw. an der Basis **20** des Fräsrohlings **1** angebracht. In diesem Ausführungsbeispiel füllt der Zentralstift **4** die Kanalbohrung **12** formschlüssig aus. Das Stift-Konterelement **5** dient zur Fixierung des Zentralstiftes **4** am haltefortsatzseitigen Ende des Fräsrohlings **1.**

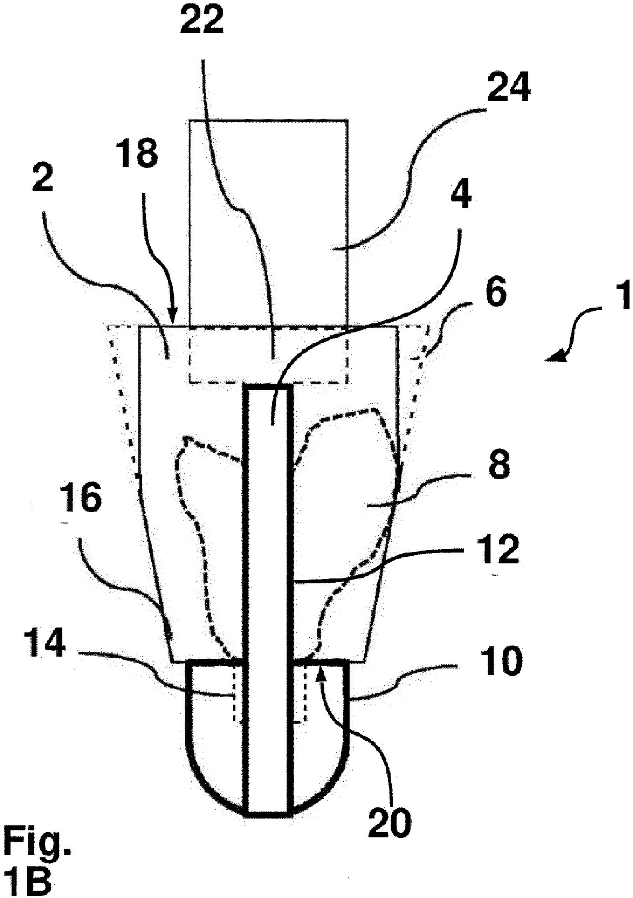

Aus **Fig. 1B** ist eine schematische Darstellung des seitlichen Querschnitts einer weiteren Ausführungsform eines erfindungsgemäßen teilgefertigten Fräsrohlings **1** mit Zentralstift **4,** Schutzkappe **10,** schematisch angedeutetem Implantat-getragenem Dentalrestaurationsteil **8,** einem Außen-Hex-Implantatanschluss **14** sowie eine weitere Ausgestaltungsform eines Halteelements **24,** das an oder zum Teil in dem teilgefertigten Fräsrohling angebracht ist, ersichtlich. Diese Variante des teilgefertigten Fräsrohlings ist eine mehrteilige, insbesondere zweiteilige, Ausführungsform eines erfindungsgemäßen teilgefertigten Rohlings **1** nach **Fig. 1A****.** In dieser Ausführungsform ist eine Fixierung an einem gängigen Haltematerial mittels eines angebrachtem Haltefortsatz 26 bzw. Halteelements **24** vorgesehen. Dieses kann in die dafür vorgesehene Ausnehmung **22** des Grundkörpers **2** des teilgefertigten Fräsrohlings aufgenommen werden. Der Zentralkanal **12** durchtritt in dieser Ausführungsform nicht die komplette Länge des teilgefertigten Rohlings **1.** Er endet an dem Punkt, an welchem das angebrachte Halte-Element **24** in die vorgesehene Ausnehmung **22** des Grundkörpers **2** des teilgefertigten Fräsrohlings eingebracht wird.

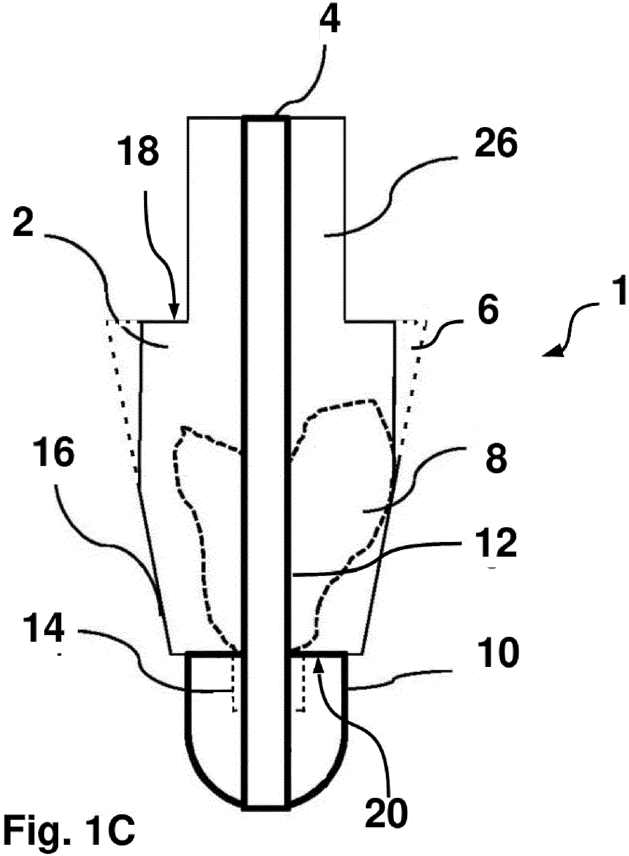

Aus **Fig. 1C** ist eine schematische Darstellung des seitlichen Querschnitts einer weiteren Ausführungsform eines erfindungsgemäßen teilgefertigten Fräsrohlings **1** mit Zentralstift **4,** Schutzkappe **10,** schematisch angedeutetem Implantat-getragenem Dentalrestaurationsteil **8,** einem Außen-Hex-Implantatanschluss **14** sowie einem Haltefortsatz **26** als Teil des Grundkörpers **2** des teilgefertigten Fräsrohlings ersichtlich. Diese Variante des teilgefertigten Fräsrohlings ist eine einteilige Ausführung eines erfindungsgemäßen Rohlings **1** wie auch schon die aus **Fig. 1A****,** jedoch in einer weiteren Ausgestaltung. In dieser Ausführungsform ist eine Fixierung an einem gängigen Haltematerial mittels eines integrierten Haltefortsatz **26** vorgesehen. Dieses ist Teil des des Grundkörpers **2** des teilgefertigten Fräsrohlings. Der Zentralkanal **12** durchtritt in dieser Ausführungsform wiederum die komplette Länge des teilgefertigten Rohlings **1.**

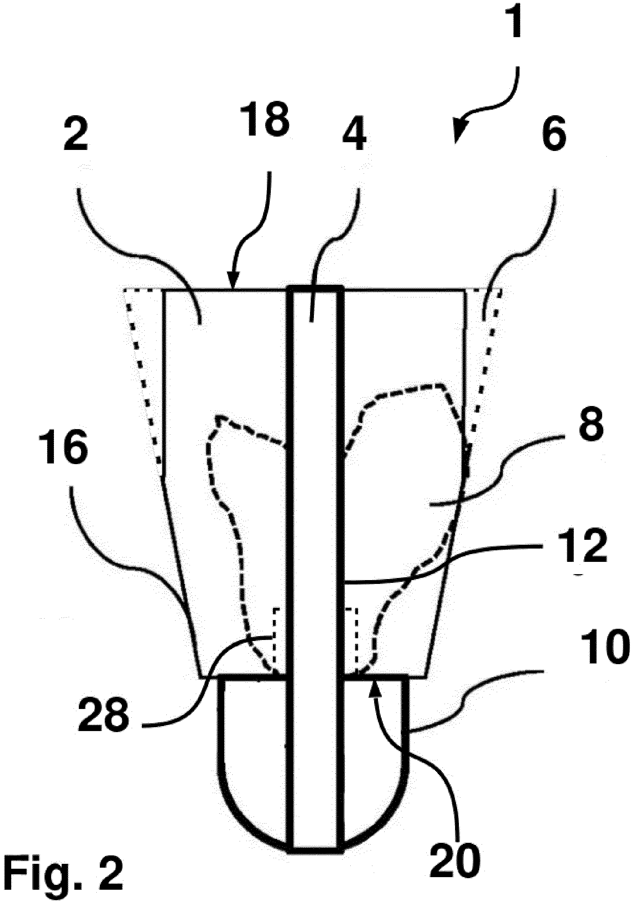

Aus **Fig. 2** ist eine schematische Darstellung des seitlichen Querschnitts einer weiteren Ausführungsform eines erfindungsgemäßen teilgefertigten Fräsrohlings **1** mit Zentralstift **4,** Schutzkappe **10,** schematisch angedeutetem Implantat-getragenem Dentalrestaurationsteil **8** nach **Fig. 1A****,** jedoch mit einem Innen-Hex-Implantatanschluss **28,** ersichtlich.

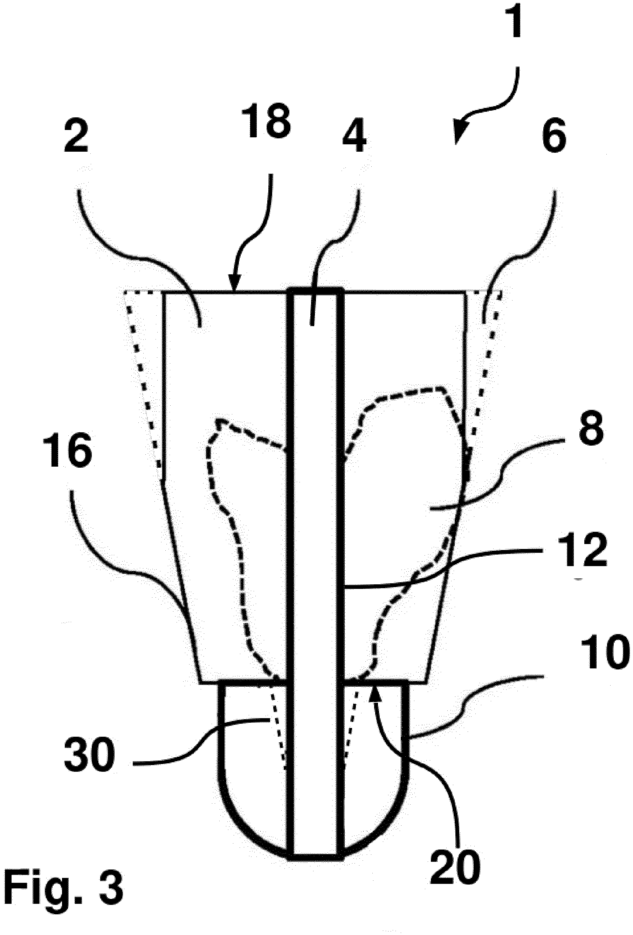

Aus **Fig. 3** ist eine schematische Darstellung des seitlichen Querschnitts einer weiteren Ausführungsform eines erfindungsgemäßen teilgefertigten Fräsrohlings **1** mit Zentralstift **4,** Schutzkappe **10,** schematisch angedeutetem Implantat-getragenem Dentalrestaurationsteil **8** nach **Fig. 1A****,** jedoch mit einem Konischen-Implantatanschluss **30,** ersichtlich.

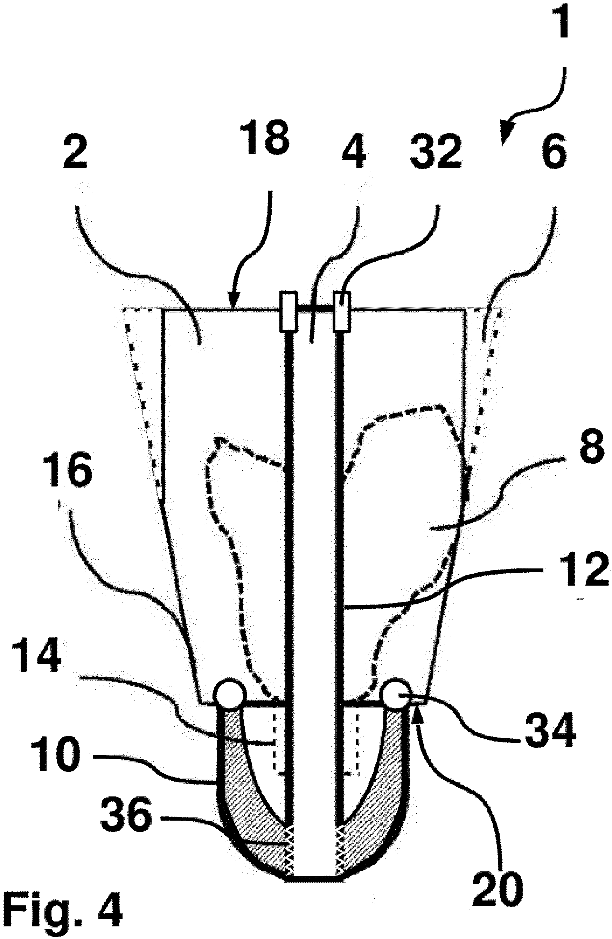

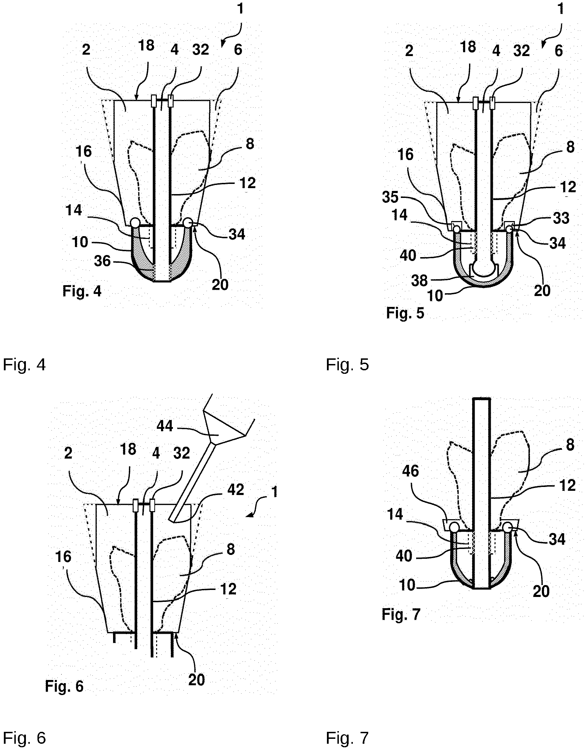

Aus **Fig. 4** ist eine schematische Darstellung des seitlichen Querschnitts einer weiteren Ausführungsform eines erfindungsgemäßen teilgefertigten Fräsrohlings **1** mit Zentralstift **4,** Schutzkappe **10** mit Gewindefixierung **36,** schematisch angedeutetem Implantat-getragenem Dentalrestaurationsteil **8** und einem Außen-Hex-Implantatanschluss **14** ersichtlich. In dieser Ausführungsform ist zwischen dem Zentralstift **4** und dem Zentralkanal **12** am haltefortsatzseitigen Ende eine Dichtlippe **32** eingeführt, die den Zentralkanal **12** gegen Verunreinigungen mit Stäuben oder Spänen, die während des Fräsvorgangs anfallen, abdichtet. Der Zentralkanal **12** durchtritt in dieser Ausführungsform die komplette Länge des teilgefertigten Rohlings **1.** Des Weiteren ist am kegelstumpfseitigen Ende bzw. an der Basis **20** des Zentralstifts **4** ein Außengewinde ausgebildet, das passend zum Gewinde **36** der Schutzkappe **10** ausgebildet ist, so dass diese beiden Gewinde ineinander einschraubbar sind. Dies erlaubt zum einen eine Fixierung der Schutzkappe **10** und zum anderen verhindert es das Herausziehen den Zentralstifts **4** in Richtung Haltefortsatz/Stirnseite **18.** Die Schutzkappe **10** ist in diesem Ausführungsbeispiel hohl, jedoch dickwandig ausgebildet und mittels einer Ausgestaltung **34** dergestalt, dass er die Schutzkappe gegen eine Hinterschneidung des teilgefertigten Rohlings abdichtet, am Grundkörper **2** des teilgefertigten Fräsrohlings abgedichtet. Diese dergestaltete Ausgestaltung **34** ermöglicht eine Befestigung der Schutzkappe **10** am Grundkörper **2** des teilgefertigten Fräsrohlings und gewährleistet eine optimale Abdichtung gegen mögliche Verunreinigungen.

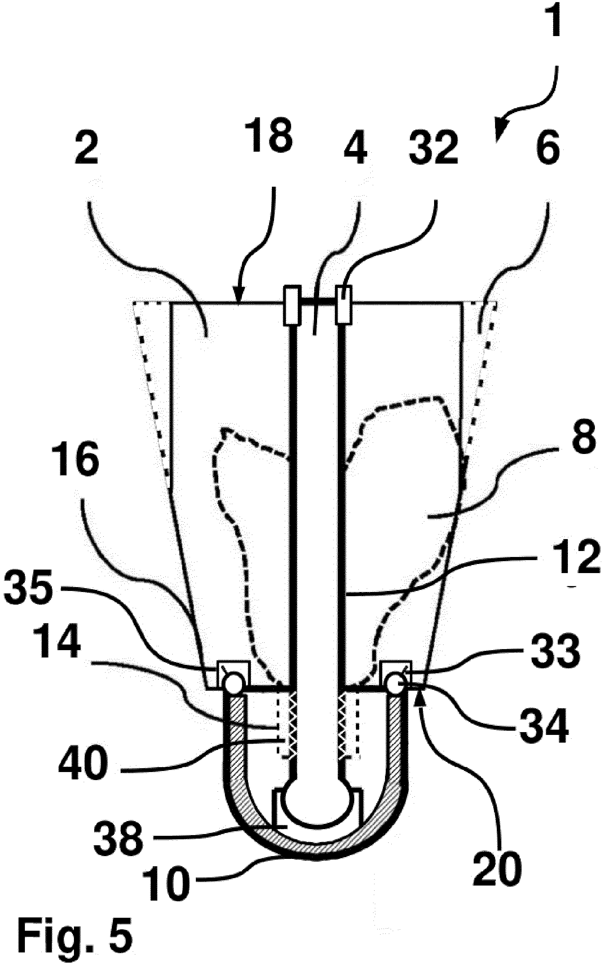

Aus **Fig. 5** ist eine schematische Darstellung des seitlichen Querschnitts einer weiteren Ausführungsform eines erfindungsgemäßen teilgefertigten Fräsrohlings **1** mit Zentralstift **4,** Schutzkappe **10** mit Reibungsfixierung **38,** schematisch angedeutetem Implantat-getragenem Dentalrestaurationsteil **8** und einem Außen-Hex-Implantatanschluss **14,** ersichtlich. Diese Ausführungsform entspricht einer Abwandlung der in **Fig. 4** dargestellten Variante. In dieser Ausführungsform ist am kegelstumpfseitigen Ende bzw. an der Basis **20,** auf Höhe des Implantatanschlusses, am Zentralstifts **4** ein Außengewinde ausgebildet, das passend zum Gewinde der Mutter des Außen-Hex-Implantatanschlusses **14** ausgebildet ist, so dass diese beiden Gewinde ineinander einschraubbar sind. Dies verhindert das Herausziehen des Zentralstifts **4** in Richtung Haltefortsatz/Stirnseite **18.** Die Schutzkappe **10** ist in diesem Ausführungsbeispiel hohl, jedoch dünnwandig ausgebildet und mittels einer Ausgestaltung **34** dergestalt, dass er die Schutzkappe gegen eine Hinterschneidung **33** des teilgefertigten Rohlings abdichtet, am Grundkörper **2** des teilgefertigten Fräsrohlings abgedichtet. Um diese Fixierung wird während des Fräsvorgangs eine Hoheitszone **35** als CAD/CAM Schutzbereich unbearbeitet gelassen. Diese ist in **Fig. 5** als Rechteck um die derartige Ausgestaltung **34** der Dichtlippe angedeutet. Neben einer derartigen Fixierung mittels einer besonderen Ausgestaltung **34** der Dichtlippe, ist die Schutzkappe **10** mittels einer Reibungsfixierung **38** am Zentralstift **4** befestigt. Der Zentralstift **4** dringt in die Vertiefung der bevorzugt aus elastischem Material bestehenden Schutzkappe **10** ein oder durchdringt diese ganz und wird dort mittels Reibschluss fixiert.

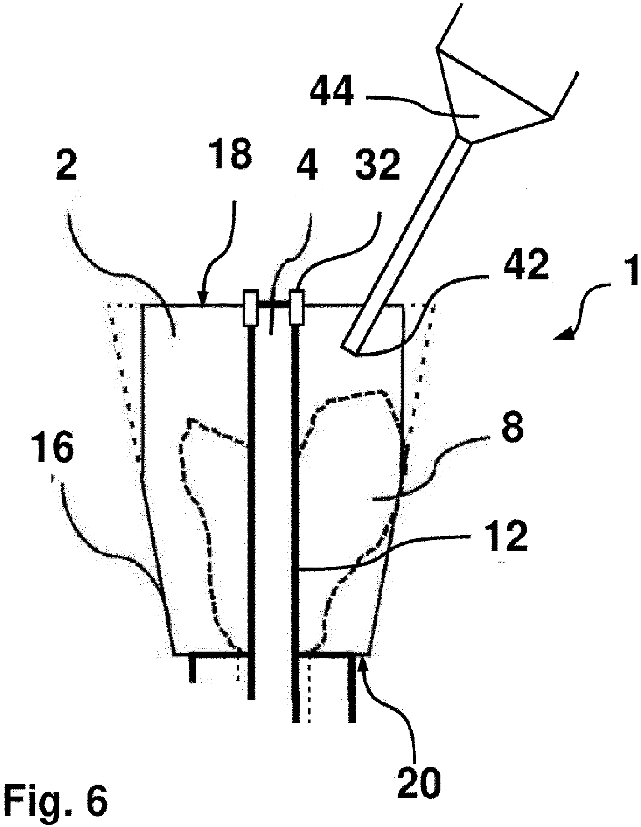

Aus **Fig. 6** ist eine schematische Teil-Darstellung des seitlichen Querschnitts einer weiteren Ausführungsform eines erfindungsgemäßen teilgefertigten Fräsrohlings **1** mit Zentralstift **4,** Dichtlippe **32,** schematisch angedeutetem Implantat-getragenem Dentalrestaurationsteil **8** sowie einer schematischen Darstellung eines Fräskopfes **44,** ersichtlich. In dieser Ausführungsform ist schematisch ein gängiger Fräskopf einer Herstellungsvorrichtung mit Frässpitze **42** dargestellt. In dieser Darstellung ist die Schutzkappe sowie der Implantat-Anschluss nur skizzenhaft am kegelstumpfseitigen Ende bzw. an der Basis **20** des Grundkörpers **2** des teilgefertigten Fräsrohlings angedeutet.

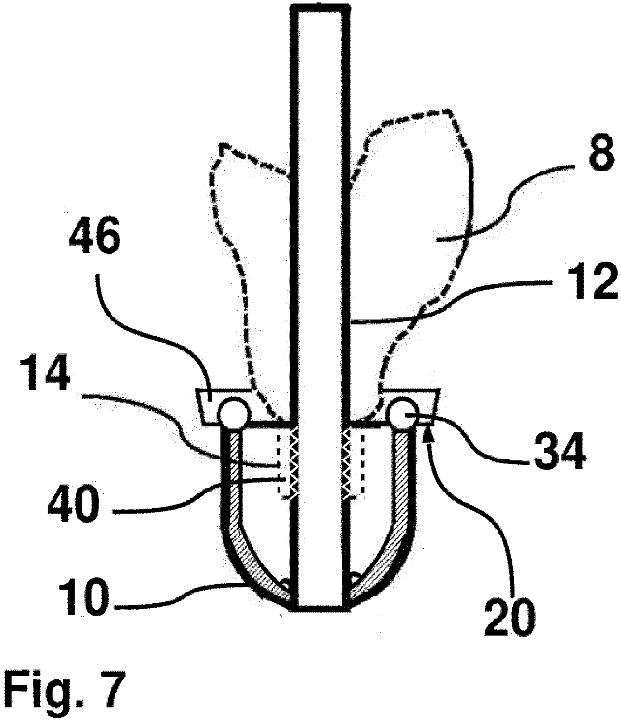

Aus **Fig. 7** ist eine schematische Darstellung des seitlichen Querschnitts einer weiteren Ausführungsform eines erfindungsgemäßen teilgefertigten Fräsrohlings **1** nach dem Fräsvorgang mit Zentralstift **4,** Schutzkappe **10,** Implantat-getragenem Dentalrestaurationsteil **8** und einem Außen-Hex-Implantatanschluss **14** ersichtlich. Diese Ausführungsform entspricht einer bearbeiteten Variante der in **Fig. 5** dargestellten Ausführungsform. Die Schutzkappe **10** ist in diesem Ausführungsbeispiel mittels einer Ausgestaltung **34** dergestalt, dass er die Schutzkappe gegen eine Hinterschneidung **33** des teilgefertigten Rohlings abdichtet, am gefrästen Grundkörper **2** des teilgefertigten Fräsrohlings abgedichtet. Um beim Fräsvorgang eine Kontamination des Schutzkappen-Inneren durch Späne, Stäube oder sonstige Verunreinigung zu verhindern, wird ein Hoheitsbereich, eine sogenannte Hoheitszone **46** vom Fräsen ausgenommen. In diesem Ausführungsbeispiel ist diese flach gestaltet, jedoch ist eine konische Gestaltung, die zur Mitte hin an Dicke zunimmt auch denkbar. Dies ermöglicht neben der Abdichtung der Schutzkappe **10,** auch die sichere Verankerung dieser durch eine besondere Ausgestaltung **34** der Dichtlippe. Eine solche Hoheitszone **46** kann beispielsweise 0,2 mm stark sein. Diese Hoheitszone **46** wird beim Nacharbeiten, zum Beispiel durch einen Zahntechniker mit einem Handfräser in einem Dentallabor, entfernt.

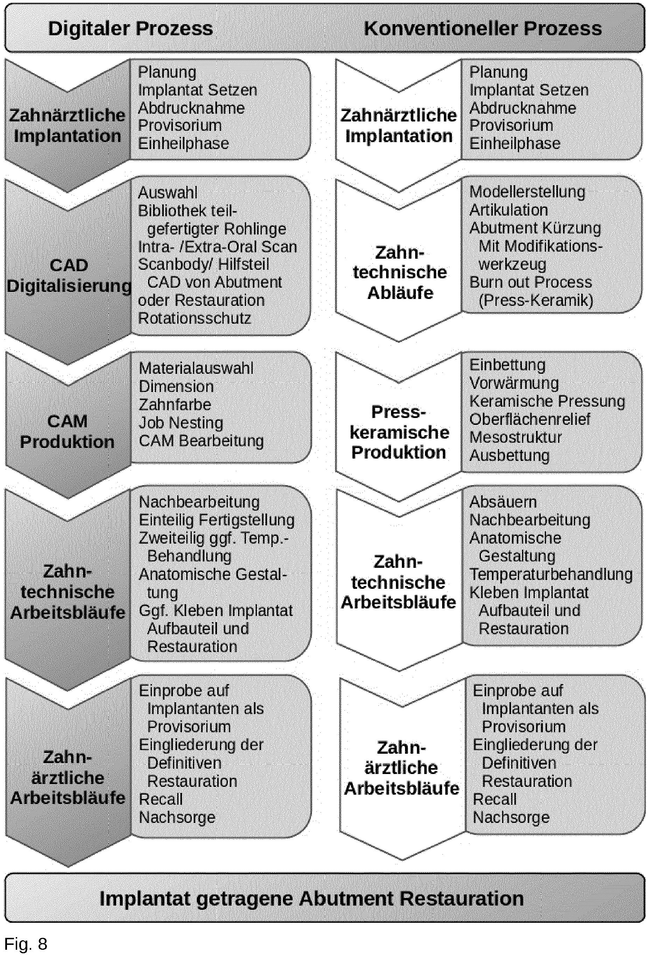

In **Fig. 8** ist eine schematische Darstellung des Herstellungs-Verfahrens eines Dentalrestaurationsteils als digitaler Prozess aus einem teilgefertigten Fräsrohling als Flow-Chart dargestellt. Zur Veranschaulichung ist gegenübergestellt der konventionelle Prozess der Herstellung eines Dentalrestaurationsteils dargestellt.

### Bezugszeichenliste

- **1**: teilgefertigter Fräsrohling
- **2**: Grundkörper
- **4**: Zentralstift
- **5**: Stift-Konterelement
- **6**: überschüssige Bereiche
- **8**: Implantat-getragenes Dentalrestaurationsteil
- **10**: Schutzkappe
- **12**: Zentralkanal bzw. Kanalbohrung
- **14**: Außen-Hex-Implantatanschluss
- **16**: Kegelstumpf
- **18**: Stirnseite
- **20**: Basis bzw. kegelstumpfseitiges Ende
- **22**: Ausnehmung
- **24**: Halteelement
- **26**: Haltefortsatz
- **28**: Innen-Hex-Implantatanschluss
- **30**: Konischen-Implantatanschluss
- **32**: Dichtlippe
- **33**: Hinterschneidung
- **34**: Ausgestaltung
- **35**: Hoheitszone
- **36**: Gewindefixierung bzw. Gewinde
- **38**: Reibungsfixierung
- **42**: Frässpitze
- **44**: Fräskopf
- **46**: Hoheitszone

## Patentansprüche

1. Schutzkappenvorrichtung für einen Fräsrohling, mit einem Halteelement (24) oder Haltefortsatz (26), mit welchem der Fräsrohling (1), insbesondere in einem Spannhalter einer Dentalfräsmaschine, einspannbar ist, mit einem zentralen Kanal (12), der sich über mindestens 70 % der Länge des Rohlings (1) erstreckt und/oder diesen durchtritt, wobei der Kanal (12) an oder in dem Halteelement (24) oder -fortsatz (26) endet, mit einem Zentralstift (4), der sich in dem Kanal (12) erstreckt, wobei der Zentralstift (4) in dem Kanal (12) entweder fixiert ist oder beweglich gelagert ist, **dadurch gekennzeichnet, dass** eine Schutzkappe (10) eine Stirnseite (20), die dem Halteelement (24) oder Haltefortsatz (26) gegenüber liegt, des Fräsrohlings (1) abdeckt.

2. Schutzkappenvorrichtung für einen Fräsrohling nach Anspruch 1, **dadurch gekennzeichnet dass** der Fräsrohling einem Kegelstumpfabschnitt aufweist, der sich über mehr als 30 % der Länge des Rohlings erstreckt, und zwar an dem von dem Halteelement (24) oder Haltefortsatz(26) entfernten Teil des Rohlings (22).

3. Schutzkappenvorrichtung für einen Fräsrohling nach einem der Ansprüche 1 oder 2, **dadurch gekennzeichnet, dass** der Zentralstift (4) an der Stirnseite (20) des Rohlings (22) ein Gewinde (36) aufweist, das mit einer Mutter in Eingriff steht und die Schutzkappe (10) die Mutter abdeckt.

4. Schutzkappenvorrichtung für einen Fräsrohling nach einem der vorherigen Ansprüche, **dadurch gekennzeichnet, dass** die Schutzkappe (10) aus einem elastischen Material wie einem Elastomer ausgebildet ist und eine, insbesondere kegelstumpfseitige, Stirnfläche (18) des Rohlings insbesondere zu mehr als 50% abdeckt.

5. Schutzkappenvorrichtung für einen Fräsrohling nach einem der vorherigen Ansprüche, **dadurch gekennzeichnet, dass** die Schutzkappe (10) aus Vollmaterial, insbesondere aus einem Kunststoff und/oder aus Metall, ausgebildet ist und mindestens teilweise an den Zentralstift (4) und/oder einen Implantatsanschluss (14, 28 bzw. 30) anliegt.

6. Schutzkappenvorrichtung für einen Fräsrohling nach einem der vorherigen Ansprüche, **dadurch gekennzeichnet, dass** zwischen dem Zentralstift (4) und der Schutzkappe (10) an der Stirnseite (20) und/oder zwischen dem Zentralstift (4) und dem Fräsrohling (1) am haltefortsatzseitigen Ende eine Dichtung angebracht ist.

7. Schutzkappenvorrichtung für einen Fräsrohling nach einem der vorherigen Ansprüche, **dadurch gekennzeichnet, dass** der Zentralstift (4) mittels einer Verdickung an einem Ende, einer Dichtlippe oder mittels Schrauben vor dem Herausziehen geschützt ist.

8. Fräsrohling, mit einem Halteelement (24) oder Haltefortsatz (26), mit welchem der Fräsrohling (1) insbesondere in einem Spannhalter einer Dentalfräsmaschine einspannbar ist, mit einem zentralen Kanal (12), der sich über mindestens 70 % der Länge des Rohlings (1) erstreckt und/oder diesen durchtritt, wobei der Kanal (12) an oder in dem Halteelement (24) oder Haltefortsatz (26) endet, mit einem Zentralstift (4), der sich in dem Kanal (12) erstreckt, wobei der Zentralstift (4) in dem Kanal (12) fixiert ist, **dadurch gekennzeichnet, dass** die Schutzkappe (10) eine Stirnseite (20), die dem Halteelement (24) oder Haltefortsatz (26) gegenüberliegt, des Fräsrohlings (1) abdeckt und diese, den Zentralstift (4) und damit die Öffnung des Kanals (12) abdichtet.

9. Fräsrohling nach Anspruch 8, **dadurch gekennzeichnet, dass** an der Stirnseite (20) des Rohlings ein Implantatanschluss (14, 28 bzw. 30), insbesondere ein Außen-Hex (14), ein Innen-Hex (28) oder ein Konus (30), ausgebildet ist, der von der Schutzkappe (10) dichtend abgedeckt ist und dass die Schutzkappe (10) mittels Reibungschluss, mittels eines Ineinander-Greifen des Dichtringes der Schutzkappe (10) und des Fräsrohlings (1) und/oder mittels eines Gewindes (36) an dem Zentralstift (4) befestigt ist.

10. Fräsrohling nach einem der Ansprüche 8 oder 9, **dadurch gekennzeichnet, dass** der Zentralstift (4) an der Stirnseite (20) des Rohlings ein Gewinde (36) aufweist, das mit einer Mutter in Eingriff steht und die Schutzkappe (10) die Mutter abdeckt.

11. Fräsrohling nach einem der Ansprüche 8 bis 10, **dadurch gekennzeichnet, dass** der Zentralkanal (12) am haltefortsatzseitigen Ende und/oder an der Stirnseite (20) und/oder entlang des gesamten zentralen Kanals ein Innengewinde aufweist und der Zentralstift (4) ein zum Gewinde des Zentralkanals passendes Außengewinde aufweist.

12. Fräsrohling nach einem der Ansprüche 8 bis 11, **dadurch gekennzeichnet, dass** zwischen dem Zentralstift (4) und der Schutzkappe (10) an der Stirnseite (20) und/oder zwischen dem Zentralstift (4) und dem Fräsrohling (1) am haltefortsatzseitigen Ende eine Dichtung angebracht ist.

13. Verfahren zur Herstellung eines Dentalrestaurationsteils aus einem Fräsrohling (1), bei welchem einen zentraler Kanal (12) geschaffen wird, der an oder in einem Halteelement (24) oder Haltefortsatz (26) endet, an welchem der Fräsrohling (1) eingespannt wird, **dadurch gekennzeichnet, dass** mit dem zentralen Kanal (12) mehr als 70 % der Länge des Rohlings (1) durchdrungen werden, insbesondere der Rohling (1) komplett durchdrungen wird, und ein Zentralstift (4) in diesen Kanal (12) eingebracht wird, wobei der Zentralstift (4) am haltefortsatzseitigen Ende in dem Kanal (12) fixiert wird, und dass der Zentralstift (4) und die Stirnfläche (20), die dem Halteelement (24) oder Haltefortsatz (26) gegenüber liegt,, insbesondere mindestens zu 50%, von einer Schutzkappe (10), die dichtend an die Stirnfläche angebracht wird, abgedeckt werden.

14. Verfahren nach Anspruch 13, **dadurch gekennzeichnet, dass** der Fräsrohling (1) teilgefertigt wird und sich an der Stirnfläche ein Implantatanschluss (14, 28 bzw. 30) erstreckt, der von der Schutzkappe (10) ebenfalls abgedeckt wird.

15. Verfahren nach einem der Ansprüche 13 oder 14, **dadurch gekennzeichnet, dass** der Fräsrohling (1) nach Bestückung mit dem Zentralstift (4) und der Schutzkappe (10) in einen Spannhalter einer Dentalfräsmaschine eingespannt wird und die Dentalfräsmaschine den Fräsrohling fräst, während sich der Zentralstift (4) in dem Kanal (12) erstreckt und während die Schutzkappe (10) ein Teil der Stirnseite (20) des Fräsrohlings (1) abdeckt.

## Geänderte Patentansprüche

### Geänderte Patentansprüche gemäss Regel 137(2) EPÜ.

1. Schutzkappenvorrichtung für einen Fräsrohling, der ein Halteelement (24) oder einen Haltefortsatz (26) aufweist, mit welchem der Fräsrohling (1), insbesondere in einem Spannhalter einer Dentalfräsmaschine, einspannbar ist, wobei der Fräsrohling (1) einen zentralen Kanal (12) aufweist, der sich über mindestens 70 % der Länge des Fräsrohlings (1) erstreckt und/oder diesen durchtritt, wobei der Kanal (12) an oder in dem Halteelement (24) oder Haltefortsatz (26) endet, wobei die Schutzkappenvorichtung einen Zentralstift (4) und eine Schutzkappe (10) aufweist, wobei der Zentralstift (4) dazu ausgebildet ist,, sich in dem Kanal (12) zu erstrecken und in dem Kanal (12) entweder fixiert oder beweglich gelagert zu werden, wobei die Schutzkappe (10) dazu ausgebildet ist, eine Stirnseite (20) des Fräsrohlings (1), die dem Halteelement (24) oder Haltefortsatz (26) gegenüber liegt, abzudecken, **dadurch gekennzeichnet, dass** die Schutzkappe (10) aus einem Elastomer oder aus einem spröden Kunststoff ausgebildet ist.

2. Schutzkappenvorrichtung für einen Fräsrohling nach Anspruch 1, **dadurch gekennzeichnet dass** der Fräsrohling einem Kegelstumpfabschnitt aufweist, der sich über mehr als 30 % der Länge des Rohlings erstreckt, und zwar an der von der Schutzkappe (10) abgedeckten Stirnseite (20) des Fräsrohlings (1).

3. Schutzkappenvorrichtung für einen Fräsrohling nach einem der Ansprüche 1 oder 2, **dadurch gekennzeichnet, dass** der Zentralstift (4) an der Stirnseite (20) des Rohlings (22) ein Gewinde (36) aufweist, das mit einer Mutter in Eingriff steht und die Schutzkappe (10) die Mutter abdeckt.

4. Schutzkappenvorrichtung für einen Fräsrohling nach einem der vorherigen Ansprüche, **dadurch gekennzeichnet, dass** die Schutzkappe (10) aus einem elastischen Material wie einem Elastomer ausgebildet ist und eine, insbesondere kegelstumpfseitige, Stirnfläche (18) des Rohlings insbesondere zu mehr als 50% abdeckt.

5. Schutzkappenvorrichtung für einen Fräsrohling nach einem der vorherigen Ansprüche, **dadurch gekennzeichnet, dass** die Schutzkappe (10) aus Vollmaterial, insbesondere aus einem Kunststoff und/oder aus Metall, ausgebildet ist und mindestens teilweise an den Zentralstift (4) und/oder einen Implantatsanschluss (14, 28 bzw. 30) anliegt.

6. Schutzkappenvorrichtung für einen Fräsrohling nach einem der vorherigen Ansprüche, **dadurch gekennzeichnet, dass** zwischen dem Zentralstift (4) und der Schutzkappe (10) an der Stirnseite (20) und/oder zwischen dem Zentralstift (4) und dem Fräsrohling (1) am haltefortsatzseitigen Ende eine Dichtung angebracht ist.

7. Schutzkappenvorrichtung für einen Fräsrohling nach einem der vorherigen Ansprüche, **dadurch gekennzeichnet, dass** der Zentralstift (4) an einem Ende eine Verdickung, eine Dichtlippe oder Schrauben aufweist.

8. Fräsrohling, mit einem Halteelement (24) oder Haltefortsatz (26), mit welchem der Fräsrohling (1) insbesondere in einem Spannhalter einer Dentalfräsmaschine einspannbar ist, mit einem zentralen Kanal (12), der sich über mindestens 70 % der Länge des Rohlings (1) erstreckt und/oder diesen durchtritt, wobei der Kanal (12) an oder in dem Halteelement (24) oder Haltefortsatz (26) endet, mit einem Zentralstift (4), der sich in dem Kanal (12) erstreckt, wobei der Zentralstift (4) in dem Kanal (12) fixiert ist, **dadurch gekennzeichnet, dass** die Schutzkappe (10) eine Stirnseite (20), die dem Halteelement (24) oder Haltefortsatz (26) gegenüberliegt, des Fräsrohlings (1) abdeckt und diese, den Zentralstift (4) und damit die Öffnung des Kanals (12) abdichtet.

9. Fräsrohling nach Anspruch 8, **dadurch gekennzeichnet, dass** an der Stirnseite (20) des Rohlings ein Implantatanschluss (14, 28 bzw. 30), insbesondere ein Außen-Hex (14), ein Innen-Hex (28) oder ein Konus (30), ausgebildet ist, der von der Schutzkappe (10) dichtend abgedeckt ist und dass die Schutzkappe (10) mittels Reibungschluss, mittels eines Ineinander-Greifen des Dichtringes der Schutzkappe (10) und des Fräsrohlings (1) und/oder mittels eines Gewindes (36) an dem Zentralstift (4) befestigt ist.

10. Fräsrohling nach einem der Ansprüche 8 oder 9, **dadurch gekennzeichnet, dass** der Zentralstift (4) an der Stirnseite (20) des Rohlings ein Gewinde (36) aufweist, das mit einer Mutter in Eingriff steht und die Schutzkappe (10) die Mutter abdeckt.

11. Fräsrohling nach einem der Ansprüche 8 bis 10, **dadurch gekennzeichnet, dass** der Zentralkanal (12) am haltefortsatzseitigen Ende und/oder an der Stirnseite (20) und/oder entlang des gesamten zentralen Kanals ein Innengewinde aufweist und der Zentralstift (4) ein zum Gewinde des Zentralkanals passendes Außengewinde aufweist.

12. Fräsrohling nach einem der Ansprüche 8 bis 11, **dadurch gekennzeichnet, dass** zwischen dem Zentralstift (4) und der Schutzkappe (10) an der Stirnseite (20) und/oder zwischen dem Zentralstift (4) und dem Fräsrohling (1) am haltefortsatzseitigen Ende eine Dichtung angebracht ist.

13. Verfahren zur Herstellung eines Dentalrestaurationsteils aus einem Fräsrohling (1), bei welchem einen zentraler Kanal (12) geschaffen wird, der an oder in einem Halteelement (24) oder Haltefortsatz (26) endet, an welchem der Fräsrohling (1) eingespannt wird, **dadurch gekennzeichnet, dass** mit dem zentralen Kanal (12) mehr als 70 % der Länge des Rohlings (1) durchdrungen werden, insbesondere der Rohling (1) komplett durchdrungen wird, und ein Zentralstift (4) in diesen Kanal (12) eingebracht wird, wobei der Zentralstift (4) am haltefortsatzseitigen Ende in dem Kanal (12) fixiert wird, und dass der Zentralstift (4) und die Stirnfläche (20) , die dem Halteelement (24) oder Haltefortsatz (26) gegenüber liegt,, insbesondere mindestens zu 50%, von einer Schutzkappe (10), die dichtend an die Stirnfläche angebracht wird, abgedeckt werden.

14. Verfahren nach Anspruch 13, **dadurch gekennzeichnet, dass** der Fräsrohling (1) teilgefertigt wird und sich an der Stirnfläche ein Implantatanschluss (14, 28 bzw. 30) erstreckt, der von der Schutzkappe (10) ebenfalls abgedeckt wird.

15. Verfahren nach einem der Ansprüche 13 oder 14, **dadurch gekennzeichnet, dass** der Fräsrohling (1) nach Bestückung mit dem Zentralstift (4) und der Schutzkappe (10) in einen Spannhalter einer Dentalfräsmaschine eingespannt wird und die Dentalfräsmaschine den Fräsrohling fräst, während sich der Zentralstift (4) in dem Kanal (12) erstreckt und während die Schutzkappe (10) ein Teil der Stirnseite (20) des Fräsrohlings (1) abdeckt.
